# EUROPEAN PATENT APPLICATION

(11) **EP 3 009 180 A1**
(43) Date of publication of application: **20.04.2016**
(21) Application number: 14810303.9
(22) Date of filing: 07.05.2014
(51) Int. Cl.: B01D 47/02, B01D 53/78, B01D 53/75

(54) **APPARATUS AND METHOD FOR TREATING HARMFUL GASES AND PREVENTING GENERATION OF AND REMOVING HARMFUL SUBSTANCES**

(30) Priority: 11.06.2013 KR 20130066525
(71) Applicant: Sinyoung Construction Co., Ltd., Hongcheon-gun, Gangwon-do 250-911 (KR)
(72) Inventor: KIM, Woong Hoe, Nam-gu Incheon 22166 (KR); KIM, See Woong, Hongcheon-gun Gangwon-do 250-902 (KR); JEON, Sang Guk, Chuncheon-si Gangwon-do 200-765 (KR); JUNG, Soo Yong, Chuncheon-si Gangwon-do 200-755 (KR)
(74) Representative: Keilitz, Wolfgang
(86) International application number: PCT/KR2014/003999
(87) International publication number: WO 2014/200184

(57) **Abstract**

The present invention relates to an apparatus for treating harmful gases and preventing the generation of and removing harmful substances, comprising a primary prevention processing part, which is connected to a flue through which harmful gases generated due to high-temperature flame flow, for quenching the harmful gases and thereby preventing harmful substances from generating from the harmful gases. The primary prevention processing part comprises: a primary processing chamber in which cooling water is accommodated; a primary suction pipe provided inside the primary processing chamber and connected to the flue; a primary rotating blade part, which is connected to the lower part of the primary suction pipe, and which rotates submerged under the cooling water so as to emit the harmful gases in the form of microbubbles into the cooling water and thereby allow the harmful gases to come into contact with the cooling water and be quenched; and a primary blade rotating part for rotating the primary rotating blade part.

## Description

### Technical Field

This invention relates to an apparatus and method for treating harmful gases and preventing generation of and removing harmful substances, and more particularly, to an apparatus and method for treating harmful gases and preventing generation of and removing harmful substances, which rapidly cools the harmful gases and thus fundamentally prevents the generation of and removes harmful substances such as dioxins.

### Background Art

Exhaust gases generated from an incinerator which incinerates household garbage of cities or industrial waste contain harmful substances such as CO₂, HCl, NOₓ, Soₓ, dust and dioxins. Various conventional methods for treating the exhaust gases containing the above-described harmful substances have been used.

Most current methods for preventing emission of the harmful substances have a system for collecting and managing the harmful substances after the harmful substances are generated. That is, the current methods have a technical system which maximally collects the harmful substances, by generating the harmful substances. Therefore, since the harmful substances are generated somewhere, and the generated substances should be collected and stored, there is a problem in management thereof.

Also, currently commercialized apparatuses for removing and collecting the harmful substances require an injection type cooling tower or separate facilities and devices for forming cooled air to cool a high temperature generated at a site. Accordingly, there are some problems that a wide installation area and equipment for installing the facilities are required, and high costs are involved in installation and management of the facilities.

Such conventional technologies for preventing emission of the harmful substances cause many problems such as the wide installation area due to an increase in a size of a facility for preventing the emission of the harmful substances and high investment costs. The high costs cause a rise in manufacturing cost, and thus lead to a serious problem in price competitiveness of production goods, and particularly, provide a big worry to many companies which are confronted with regulations relative to greenhouse gas emission.

### [Related technical documents]

### [Patent documents]

(Patent document 1) Korean Patent No.10-0613303 entitled "Hybrid-Type Method and Apparatus for Treating Exhaust Gas"
(Patent document 2) Korean Patent No.10-1133206 entitled "Charcoal Ignition Device with Harmful Material Removal Function"

### Summary of Invention

### Technical Problem

The present invention is directed to providing an apparatus and method for treating harmful gases and preventing generation of and removing harmful substances, which fundamentally prevents generation of harmful substances from harmful gases, and thus simplifies a harmful gas treatment process.

Also, the present invention is directed to providing an apparatus and method for treating harmful gases and preventing generation of and removing harmful substances, which has a simple structure and thus minimizes costs for installation and management of a facility.

Also, the present invention is directed to providing an apparatus and method for treating harmful gases and preventing generation of and removing harmful substances, which is able to prevent the generation of the harmful substances by rapidly cooling high temperature harmful gases, and also, to prevent the generation of the harmful substances from the harmful gases, which does not have high temperature, through treatment water, and thus to be selectively used according to a generation process of the harmful gases.

These objects and various advantages of the present invention will become apparent to those skilled in the art from the following exemplary embodiments of the present invention.

### Solution to Problem

One aspect of the present invention provides an apparatus and method for treating harmful gases and preventing generation of and removing harmful substances, including a primary prevention processing part connected with a flue in which harmful gases and harmful substances generated by high temperature flame flow and configured to rapidly cool the harmful gases to prevent the harmful substances from being produced from the harmful gases, wherein the primary prevention processing part includes a primary processing chamber in which cooling water is accommodated; a primary suction pipe which is provided inside the primary processing chamber and connected with the flue; a primary rotary blade part which is coupled to a lower portion of the primary suction pipe, rotated in a submerged state under the cooling water, discharges the harmful gases in the form of microbubbles into the cooling water to allow the harmful gases to come into contact with the cooling water and to be rapidly cooled; and a primary rotary blade driving part which rotates the primary rotary blade part.

The primary suction pipe may be formed to have an outer diameter corresponding to an inner diameter of the flue, and may be provided so that an upper end thereof is inserted into the flue to a predetermined length and a lower end thereof is in communication with the primary rotary blade part.

The primary rotary blade part may include a harmful gas suction pipe where an upper portion is opened so as to be in communication with the primary suction pipe, and an outer circumferential surface having harmful gas discharge ports formed at regular intervals; an upper support plate and a lower support plate which are coupled to an upper portion and a lower portion of the harmful gas suction pipe, respectively; and a plurality of rotary blades which are spirally coupled at one sides of the harmful gas discharge ports and discharge the harmful gases to the cooling water.

Ends of the rotary blade may be formed to protrude outward to a predetermined length in radial directions of the upper support plate and the lower support plate.

A cooling water circulation and filtration part which circulates the cooling water therein and discharges sludge is provided at one side of the primary processing chamber.

The apparatus may further include a secondary prevention processing part which dissolves primarily treated gases treated in the primary prevention processing part in treatment water in which a harmful gas treatment agent dissolved, and treats residual substances contained in the primarily treated gases.

Meanwhile, the object of the present invention can be achieved by the apparatus and method for treating the harmful gases and preventing the generation of and removing the harmful substances. Another aspect of the present invention provides a method for treating harmful gases and preventing generation of and removing harmful substances, including a primary treatment operation in which the apparatus for treating the harmful gases and preventing the generation of and removing the harmful substances is coupled to a flue in which the high temperature harmful gases flow, rapidly cools the harmful gases by bringing the harmful gases into contact with cooling water to prevent the generation of the harmful substances; and a secondary treatment operation in which primarily treated gases passing through the primary treatment operation are submerged in treatment water containing a harmful gas treatment agent dissolved therein, and thus residual substances are treated.

The primary treatment operation may further include an operation in which the harmful gases introduced therein pass through rotary blades rotated in a submerged state under the cooling water, and thus are discharged in the form of microbubbles into the cooling water.

### Advantageous Effects of Invention

The apparatus for preventing the generation of the harmful substances by harmful gases according to the present invention can fundamentally prevent the generation of the harmful substances such as dioxins through the pure cooling water, in which a chemical component is not added, using heat, and thus can prevent the generation moment of the harmful substances. Also, the residual harmful substances which are not treated in the primary prevention processing part can be removed and collected in the secondary prevention processing part through the treatment water, and thus the emission of the harmful substances can be completely prevented.

Also, since the processing chamber and the rotary blades are additionally provided at the moving path of the harmful gases and the harmful substances, the entire structure is simple, and thus the costs for installation and management can be reduced. That is, since a separate facility for collecting and storing the dioxins is not required, the management cost can be reduced, comparing with the related art.

Also, since the primary prevention processing part and the secondary prevention processing part can be selectively used according to the generation processes of the harmful gases and the harmful substances, management efficiency can be increased.

### Brief Description of Drawings

FIG. 1 is a schematic view schematically illustrating an entire structure of an apparatus for treating harmful gases and preventing generation of and removing harmful substances according to the present invention.
FIG. 2 is a perspective view illustrating a structure of a rotary blade part of the apparatus for treating the harmful gases and preventing the generation of and removing the harmful substances according to the present invention.
FIG. 3 is a plan view illustrating a planar structure of the rotary blade part of the apparatus for treating the harmful gases and preventing the generation of and removing the harmful substances according to the present invention.
FIGS. 4 to 8 are a table and graphs illustrating treatment results of the harmful gases through the apparatus for treating the harmful gases and preventing the generation of and removing the harmful substances according to the present invention.

### Detailed Description of Embodiment

Hereinafter, exemplary embodiments of the present invention will be described with reference to the accompanying drawings to provide a sufficient understanding of the present invention. However, the present invention is not limited to the exemplary embodiments disclosed below, but can be modified in various forms. The following exemplary embodiments are described in order to enable those of ordinary skill in the art to embody and practice the invention. Therefore, sizes and shapes of construction elements shown in the drawings may be exaggeratedly illustrated for the sake of convenience and clarity. In each of the drawings, the same components may be designated by the same reference numerals. In the following description, if it is considered that the specific description of the related and noticed functions or structures may obscure the gist of the present invention, the specific description will be omitted.

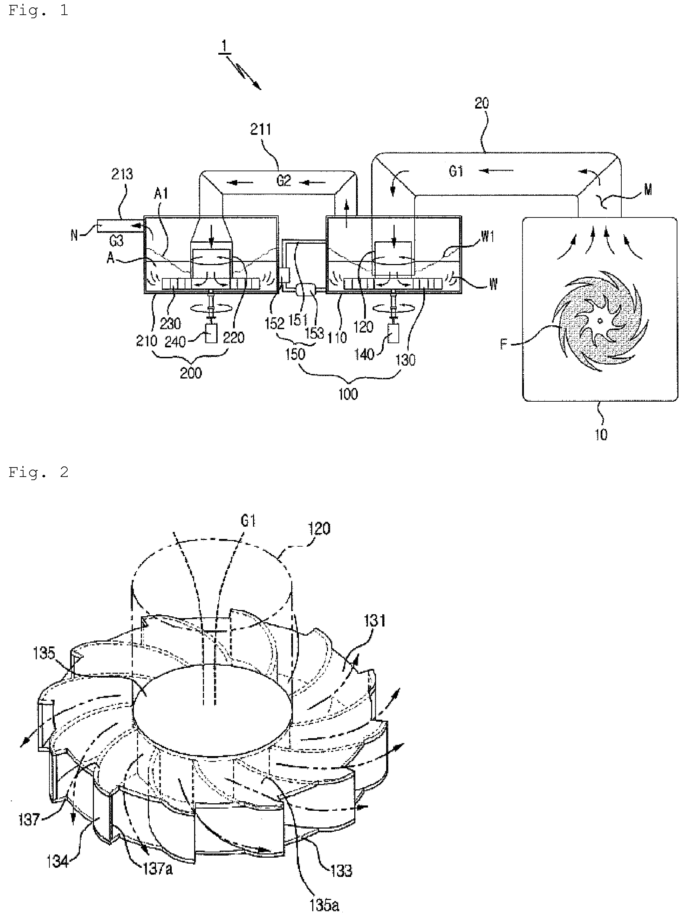

FIG. 1 is a schematic view schematically illustrating a structure of an apparatus 1 for treating harmful gases and preventing generation of and removing harmful substances according to an embodiment of the present invention.

An apparatus 1 for treating harmful gases and preventing generation of and removing harmful substances according to an embodiment of the present invention is installed to be connected with a flue 20 installed at steel mills, thermoelectric power plants, petrochemical plants, garbage incineration plants or the like to discharge the harmful substances into the atmosphere.

The apparatus 1 for treating the harmful gases and preventing the generation of and removing the harmful substances includes a primary prevention processing part 100 which rapidly cools harmful gases G1 by bringing them into contact with cooling water W and thus prevents the generation of the harmful substances, and a secondary prevention processing part 200 which purifies residual harmful substances once more by bringing primarily treated gases G2 treated in the primary prevention processing part 100 into contact with treatment water A, and thus processes the primarily treated gases G2 into secondarily treated gas G3 in the form of clean air which can be discharged into the atmosphere.

Here, in smokestack industries, such as the steel mills, the thermoelectric power plants, the petrochemical plants and the garbage incineration plants, in which the high temperature harmful gases or harmful substances are generated by flame F, the primary prevention processing part 100 and the secondary prevention processing part 200 are installed and used as a set.

However, in other industries, such as IT-related industries, high precision industries, industries requiring clean air, industries suffering from yellow dust, construction sites and large buildings, in which the harmful gases or harmful substances are generated without generation of the flame, only the secondary prevention processing part 200 may be selectively used.

That is, the primary prevention processing part 100 and the secondary prevention processing part 200 may be used separately or together according to the type, concentration, temperature and generation process of the harmful gas.

The primary prevention processing part 100 includes a primary processing chamber 110 in which the cooling water W is stored, a primary suction pipe 120 which is connected with the flue 20 and suctions the harmful gases G1, a primary rotary blade part 130 which is connected with the primary suction pipe 120 and generates a suction pressure by rotation of rotary blades 137, a primary rotary blade driving part 140 which rotates the primary rotary blade part 130, and a cooling water circulation and filtration part 150 which circulates the cooling water W in the primary processing chamber 110.

The primary processing chamber 110 is formed in a closed housing shape, and accommodates the cooling water W therein. The cooling water W is accommodated at a 1/3 height of the primary processing chamber 110. When the primary rotary blade part 130 is not rotated, a surface of the cooling water W is maintained horizontally. When the primary rotary blade part 130 is rotated, the surface of the cooling water W is formed to be inclined by a centrifugal force, as indicated by W1 in FIG. 1.

The flue 20 is inserted through an upper portion of the primary processing chamber 110, and the primary rotary blade driving part 140 is coupled to the primary rotary blade part 130 through a lower portion of the primary processing chamber 110.

The primary suction pipe 120 connects the flue 20 with the primary rotary blade part 130, and enables the harmful gases G1 to be moved to the primary rotary blade part 130. An upper area of the primary suction pipe 120 is inserted into the flue 20, and a lower area thereof is connected with a harmful gas suction pipe 135.

The primary suction pipe 120 is formed to be inserted from the harmful gas suction pipe 135 into the flue 20 to a predetermined height. It is preferable that an outer diameter of the primary suction pipe 120 is formed corresponding to an inner diameter of the flue 20, and thus all of the harmful gases G1 passed through the flue 20 are introduced into the primary suction pipe 120.

The primary rotary blade part 130 is rotated in a submerged state under the cooling water W, and serves to generate the suction pressure by which the harmful gases G1 are moved and to discharge the harmful gases G1 in the form of microbubbles into the cooling water W by a rotation force.

The primary rotary blade part 130 includes an upper support plate 131 and a lower support plate 133, the harmful gas suction pipe 135 which connects the upper support plate 131 and the lower support plate 133 with each other, and a plurality of rotary blades 137 which are coupled to an outer circumferential surface of the harmful gas suction pipe 135 at regular intervals.

The harmful gas suction pipe 135 is coupled to a lower end of the primary suction pipe 120, and moves the harmful gases moved through the primary suction pipe 120 toward the plurality of rotary blades 137. Harmful gas discharge ports 135a are formed at the outer circumferential surface of the harmful gas suction pipe 135 to be spaced apart from each other at regular intervals in a lengthwise direction. Each of the harmful gas discharge ports 135a is formed through between one pair of adjacent rotary blades 137, and discharges the harmful gases G1 between the rotary blades 137.

The upper support plate 131 and the lower support plate 133 are coupled to an upper end and a lower end of the harmful gas suction pipe 135, respectively, and cover upper and lower sides of the plurality of rotary blades 137. Therefore, the harmful gases G1 discharged through the harmful gas discharge ports 135a may not escape to an outside, and may be introduced into the cooling water W between the rotary blades 137.

The upper support plate 131 and the lower support plate 133 cover a moving path of the rotary blades 137 by a side connection plate 134. Therefore, when the cooling water W in which the harmful gases G1 are dissolved is discharged between the rotary blades 137, the side connection plate 134 may prevent the cooling water W from being introduced again from an outside and obstructing a flow of the discharged cooling water W.

The plurality of rotary blades 137 are rotatably formed to spirally extend from the outer circumferential surface of the harmful gas suction pipe 135. The rotary blades 137 receive a driving force from the primary rotary blade driving part 140, and are rotated. At this time, the primary rotary blade driving part 140 is connected to the harmful gas suction pipe 135 to rotate the harmful gas suction pipe 135 and thus to drive the plurality of rotary blades 137.

The rotary blades 137 may be formed to spirally extend, as illustrated in the drawing, or may be radially formed in a linear shape. At this time, a protrusion end 137a which protrudes with a predetermined length 1 to an outside of each of the upper support plate 131 and the lower support plate 133 is formed at an end area of each rotary blade 137.

Since the protrusion end 137a protrudes to the outside of each of the upper support plate 131 and the lower support 133, the protrusion end 137a is directly in contact with the cooling water W. Therefore, when the rotary blades 137 are rotated, the protrusion end 137a receives a great pressure, while colliding with the cooling water W. The protrusion end 137a is formed to have an angle θ2 larger than an angle θ1 of each of the rotary blades 137 with respect to the harmful gas suction pipe 135. That is, the protrusion end 137a is formed to be bent from an end of each of the rotary blades 137 at a larger angle.

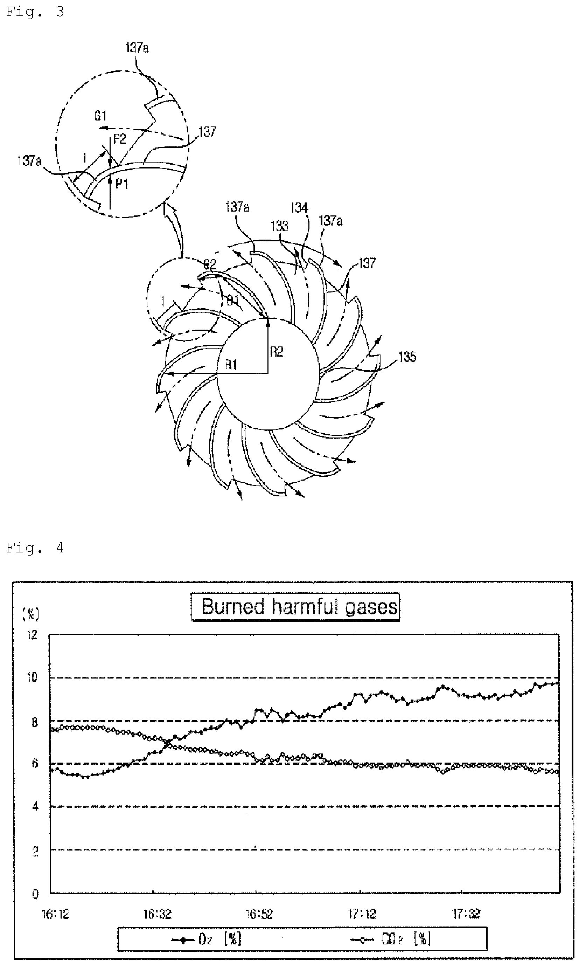

As enlargedly illustrated in FIG. 3, when the rotary blades 137 are rotated clockwise, a great pressure P2 is applied to an outer surface of the protrusion end 137a, while the outer surface of the protrusion end 137a collides with the cooling water W, and a negative pressure P1 is applied to an inner surface of the protrusion end 137a. Therefore, the harmful gases G1 are discharged along inner surfaces of the rotary blades 137, and then dissolved in the cooling water W.

Meanwhile, since the harmful gases G1 collide with the rotary blades 137 so that pressure is applied when being discharged between the rotary blades 137, the harmful gases G1 are dissolved in the cooling water W in the form of microbubbles.

Here, the harmful gases generated in an incinerator 10 typically contain harmful substances having a high temperature of about 900 °C or more. In the case of dioxins, they are decomposed at a high temperature of 850 °C, and are maximally produced at a temperature of 320 to 390 °C.

The harmful gases G1 in the form of microbubbles dissolved in the cooling water W between the rotary blades 137 are rapidly cooled from the temperature of 900 °C to reach a temperature of 100 °C. Therefore, a period of time while the harmful gases G1 remain in a temperature span of 320 to 380 °C at which the dioxins are generated is only about 1 second. Accordingly, the harmful substances such as the dioxins are fundamentally prevented from being generated from the harmful gases G1.

That is, since the primary prevention processing part 100 according to the present invention fundamentally prevents the generation of the harmful substances such as the dioxins, a conventional process for collecting, storing and managing previously generated harmful substances is not required.

Meanwhile, the cooling water circulation and filtration part 150 is provided at one side of the primary processing chamber 110 to circulate the cooling water W heat-exchanged with the high temperature harmful gases G1. At this time, dust or the like is dissolved in the cooling water, while being in contact with the harmful gases G1 in the primary processing chamber 110. The cooling water circulation and filtration part 150 includes a circulation pipe 151 which circulates the cooling water W, a circulation pump 152, and a filtration part 153 which filters harmful substances, such as sludge, contained in the cooling water W. Also, if necessary, the cooling water circulation and filtration part 150 may further include a cooling part (not shown) which maintains the cooling water at a proper temperature.

Meanwhile, the secondary prevention processing part 200 is connected to the primary processing chamber 110 and a primary treated gas discharge pipe 211. The secondary prevention processing part 200 serves to purify and discharge the primarily treated gases G2, in which the generation of the harmful gases is prevented but residual harmful substances are contained, to the atmosphere.

The secondary prevention processing part 200 has the same mechanical configuration as the primary prevention processing part 100, but is different from the primary prevention processing part 100 in that treatment water A is stored therein. The primary prevention processing part 100 accommodates the cooling water W to rapidly cool the harmful gases G1, but the secondary prevention processing part 200 accommodates the treatment water A.

The treatment water A serves to remove, neutralize and collect residual air pollutants contained in the primarily treated gases G2. The treatment water A is produced by dissolving a harmful gas treatment agent in water. The harmful gas treatment agent may be differently provided according to the type of the harmful gas to be treated. However, in the embodiment of the present invention, liquid sodium hydroxide is used as the harmful gas treatment agent. A dissolution rate of the liquid sodium hydroxide may be set within a range of 3% to 10%.

Bubbles in the treatment water A are generated by rotation of a secondary rotary blade part 230 for treatment of the harmful gases. The bubbles are discharged to an outside of a secondary processing chamber 210, purified in a purification part (not shown), and then collected or discharged after the purifying.

An operation procedure of the apparatus 1 for treating the harmful gases and preventing the generation of and removing the harmful substances according to the present invention having the above-described structure will be described with reference to FIGS. 1 to 3.

The harmful gases G1 produced by the flame F generated from the incinerator 10 are moved through the flue 20. At this time, an end of the flue 20 is connected with the primary suction pipe 120 of the primary prevention processing part 100.

When the primary rotary blade part 130 is rotated by the primary rotary blade driving part 140, a negative pressure is formed in the primary suction pipe 120, and the harmful gases G1 are suctioned into the primary suction pipe 120. The harmful gases G1 suctioned into the primary suction pipe 120 are discharged through the harmful gas discharge ports 135a, and moved to between the adjacent rotary blades 137.

At this time, while the rotary blades 137 are rotated at high speed, the great pressure P2 is generated at an outer surface of each of the rotary blades 137, and the relatively small pressure P1 is generated at an inner surface thereof, and thus the harmful gases G1 are discharged to the cooling water W along the inner surface of each of the rotary blades 137. In this process, the harmful gases G1 are continuously in contact with the rotary blades 137 which are rotated at the high speed, and thus are converted into the microbubbles. The harmful gases G1 in the form of the microbubbles are in contact with the cooling water W, and a dissolution rate thereof in the cooling water W is increased due to a wide contact area. Also, the harmful gases G1 in the form of the microbubbles are rapidly cooled within a few seconds due to a great temperature difference, and thus the generation of a harmful substance such as a dioxin is prevented.

The primarily treated gases G2 which are in contact with the cooling water W are moved to the secondary prevention processing part 200 through a secondarily treated gas duct 20. The primarily treated gases G2 passed through a secondary suction pipe 220 and the secondary rotary blade part 230 reacts with the treatment water A in which the liquid sodium hydroxide is dissolved, and thus the residual substances are absorbed and collected, neutralized and removed. Secondarily treated gases G3 which are secondarily treated like this are purified into a cleaned state which may be discharged into the atmosphere, and then discharged into the atmosphere through a secondarily treated gas discharge pipe 213.

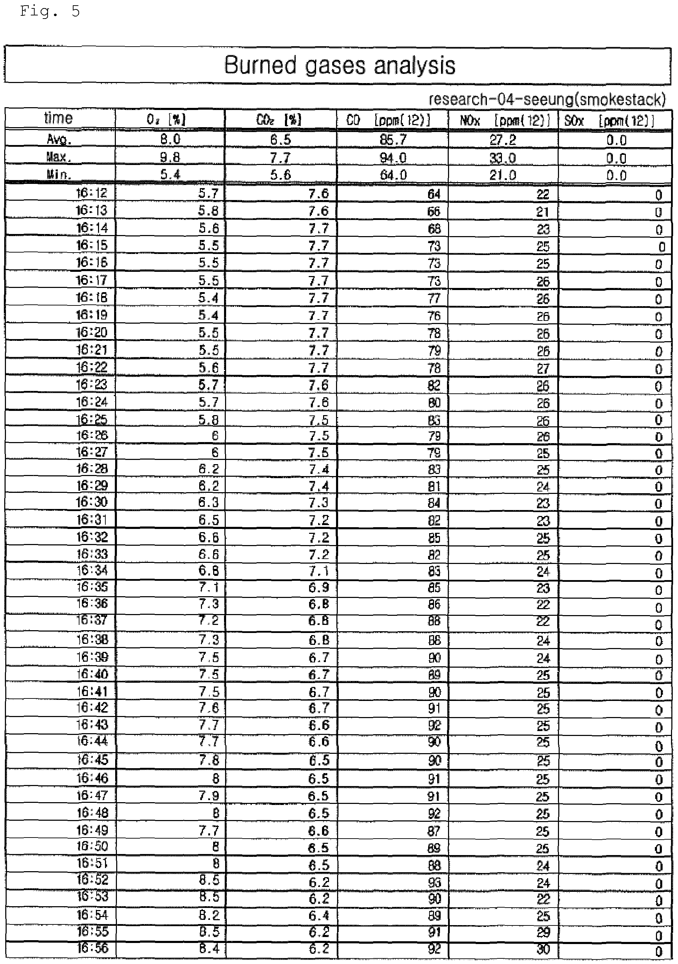

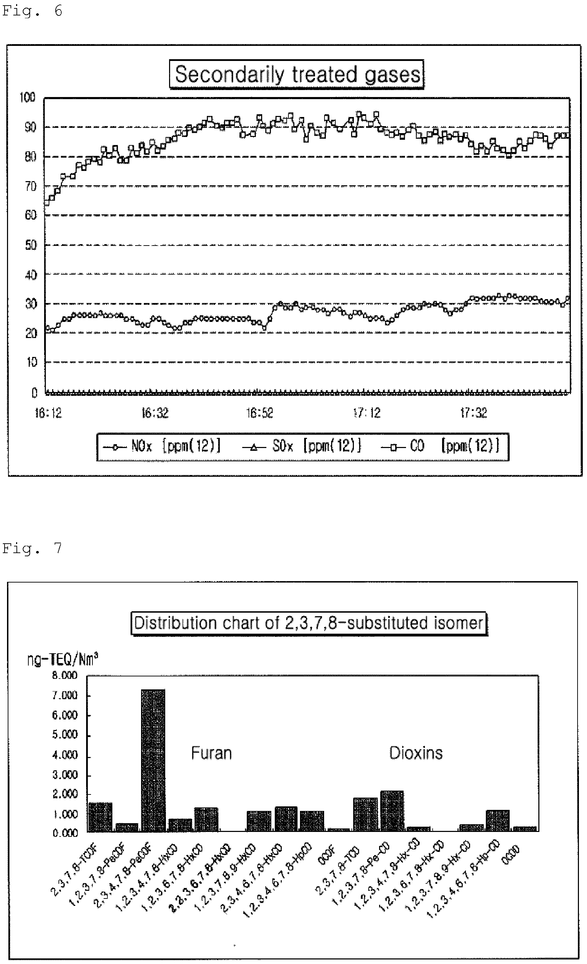

FIG. 4 is a graph indicating a concentration change in oxygen and carbon dioxide contained in the harmful gases G1 at an inlet port M of the flue 20 by time, FIG. 5 is a table analyzing components of oxygen, carbon dioxide, carbon monoxide, nitrogen oxide and sulfur oxide contained in the secondarily treated gases G3 discharged through the secondarily treated gas discharge pipe 213 of FIG. 1 by time, and FIG. 6 is a view illustrating the table of FIG. 5 indicated in a graph.

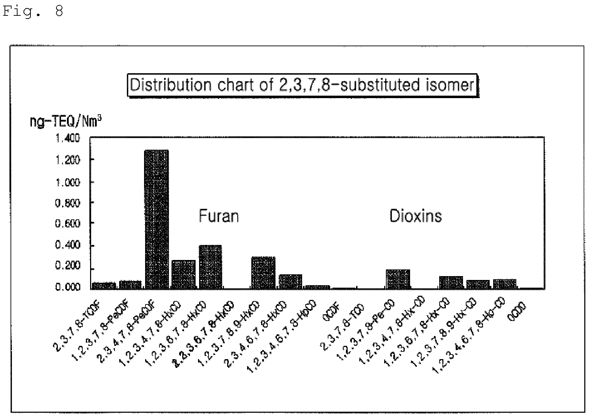

Also, FIG. 7 is a graph indicating a concentration distribution of a substituted isomer in the harmful gases G1 at the inlet port M of the flue 20, and FIG. 8 is a graph indicating the concentration distribution of the substituted isomer in the secondarily treated gases G3 flowing through the secondarily treated gas discharge pipe 213.

As illustrated in the drawings, a combustion test in which household garbage is burnt in the incinerator 10 using one primary prevention processing part 100 was carried out, and concentrations of the harmful substances were measured for four hours by a qualified measuring organization. As a result, a discharge concentration of the dioxins at the inlet port M of the flue 20 was 20.68ng-TEQ/Nm², and in the primary treated gas discharge pipe 211, the discharge concentration of the dioxins was 2.98ng-TEQ/Nm², an average discharge concentration of the nitrogen oxide was 27.2ppm, and the discharge concentration of the sulfur oxide was ppm. Accordingly, it may be understood that removal efficiency of the dioxins between the measured positions is about 85.6%, and the generation of the harmful substances is generally reduced.

As described above, the apparatus for treating the harmful gases and preventing the generation of and removing the harmful substances according to the present invention may fundamentally prevent the generation of the harmful substances such as the dioxin through the pure cooling water, in which a chemical component is not added, using heat, and thus can prevent the generation moment of the harmful substances. Also, the harmful substances remaining in the primarily treated gas may be removed and collected again in the secondary prevention processing part through the treatment water, and thus the emission of the harmful substances can be completely prevented.

Also, since the processing chamber and the rotary blades are additionally provided at the moving path of the harmful gases and the harmful substances, the entire structure is simple, and thus the costs for installation and management may be reduced. That is, since a separate facility for collecting and storing the dioxins is not required, the management cost can be reduced, compared with the related art.

Also, since the primary prevention processing part and the secondary prevention processing part may be selectively used according to the generation processes of the harmful gases and the harmful substances, management efficiency may be increased.

It will be understood that the foregoing embodiment of the apparatus for treating the harmful gases and preventing the generation of and removing the harmful substances of the present invention is for illustrative purposes only, and that, for a person of ordinary skill in the art, various substitutions, alternations and changes can be made without departing from the technical spirit or the essential characteristics of the present invention. Therefore, the above-described embodiments are for illustrating and not to limit the scope of the claims. Therefore, the technical spirit of the present invention is determined by the claims, and it should be understood that the present invention comprises all of equivalents and substitutes included in the technical scope and spirit of the invention.

### [Detailed Description of Main Elements]

1: apparatus for treating harmful gases and preventing generation of and removing harmful substances
100: primary prevention processing part
110: primary processing chamber
120: primary suction pipe
130: primary rotary blade part
131: upper support plate 133: lower support plate 135: harmful gas suction pipe
135a: harmful gas discharge port
137: rotary blade 137a: protrusion end
140: primary rotary blade driving part
150: cooling water circulation and filtration part
151: cooling water circulation pipe
152: circulation pump 153: filtration part
200: secondary prevention processing part
210: secondary processing chamber
211: primarily treated gas discharge pipe
213: secondarily treated gas discharge pipe
220: secondary suction pipe
230: secondary rotary blade part
240: secondary rotary blade driving part

## Claims

1. An apparatus for treating harmful gases and preventing generation of and removing harmful substances, comprising:
a primary prevention processing part connected with a flue in which harmful gases and harmful substances generated by high temperature flame flow and configured to rapidly cool the harmful gases to prevent the harmful substances from being produced from the harmful gases,
wherein the primary prevention processing part comprises a primary processing chamber in which cooling water is accommodated; a primary suction pipe which is provided inside the primary processing chamber and connected with the flue; a primary rotary blade part which is coupled to a lower portion of the primary suction pipe, rotated in a submerged state under the cooling water, discharges the harmful gases in the form of microbubbles into the cooling water to allow the harmful gases to come into contact with the cooling water and to be rapidly cooled; and a primary rotary blade driving part which rotates the primary rotary blade part.

2. The apparatus of claim 1, wherein the primary suction pipe is formed to have an outer diameter corresponding to an inner diameter of the flue, and provided so that an upper end thereof is inserted into the flue to a predetermined length and a lower end thereof is in communication with the primary rotary blade part.

3. The apparatus of claim 2, wherein the primary rotary blade part comprises a harmful gas suction pipe where an upper portion is opened so as to be in communication with the primary suction pipe, and an outer circumferential surface having harmful gas discharge ports formed at regular intervals; an upper support plate and a lower support plate which are coupled to an upper portion and a lower portion of the harmful gas suction pipe, respectively; and a plurality of rotary blades which are spirally coupled at one sides of the harmful gas discharge ports and discharge the harmful gases to the cooling water.

4. The apparatus of claim 3, wherein ends of the rotary blades are formed to protrude outward to a predetermined length in radial directions of the upper support plate and the lower support plate.

5. The apparatus of claim 4, wherein a cooling water circulation and filtration part which circulates the cooling water therein is provided at one side of the primary processing chamber.

6. The apparatus of any one of claims 1 to 5, further comprising a secondary prevention processing part which dissolves primarily treated gases treated in the primary prevention processing part in treatment water in which a harmful gas treatment agent dissolved, and treats residual substances contained in the primarily treated gases.

7. A method for treating harmful gases and preventing generation of and removing harmful substances using the apparatus for treating the harmful gases and preventing the generation of and removing the harmful substances of claim 1, further comprising:
a primary treatment operation in which the apparatus for treating the harmful gases and preventing the generation of and removing the harmful substances is coupled to a flue in which the high temperature harmful gases flow, rapidly cools the harmful gases by bringing the harmful gases into contact with cooling water, and thus prevents the generation of the harmful substances; and
a secondary treatment operation in which primarily treated gases passing through the primary treatment operation are submerged in treatment water containing a harmful gas treatment agent dissolved therein, and thus residual substances are treated,
wherein the primary treatment operation comprises an operation in which the harmful gases introduced therein pass through rotary blades rotated in a submerged state under the cooling water, and thus are discharged in the form of microbubbles into the cooling water.
